# EUROPEAN PATENT SPECIFICATION

(11) **EP 4 469 669 B1**
(45) Date of publication and mention of the grant of the patent: **29.10.2025**
(21) Application number: 23706171.8
(22) Date of filing: 20.01.2023
(51) Int. Cl.: F01M 1/12, F16N 7/00, F16N 7/38

(54) **OIL RESERVOIR PUMP SKIRT**
ÖLRESERVOIRPUMPENSCHÜRZE
JUPE DE POMPE DE RÉSERVOIR D'HUILE

(30) Priority: 26.01.2022 US 202263303107 P
(43) Date of publication of application: 04.12.2024
(73) Proprietor: Siemens Energy Global GmbH & Co. KG, 81739 München (DE)
(72) Inventor: GILARRANZ, Jose, L., Katy, Texas 77494 (US); JONES, Ian, 76170 Lillebonne (FR); MAJOT, Kevin, Little Genessee, New York 14754 (US)
(74) Representative: Nordmeyer, Philipp Werner
(86) International application number: PCT/US2023/011204
(87) International publication number: WO 2023/146797

(56) References cited:
- US-A- 3 768 730
- US-A- 5 535 772
- US-A- 5 605 133
- US-A1- 2004 076 413
- US-B1- 6 675 778

## Description

### CROSS-REFERENCE TO RELATED APPLICATIONS

This application claims priority to US Provisional Application Number 63/303,107, filed on January 26, 2022.

### BACKGROUND

Lubrication systems are typically needed for oil and gas processing systems, such as offshore compression trains. Such systems typically consist of a pump and reservoir for providing lubricants to various equipment needing lubrication. Lubrication oil pumps are typically located on the top of the lubrication reservoir. Multiple oil pumps may be used in such systems, for example, to provide redundancy. US 3 768 730 A discloses a fuel pre-heater. US 2004/076413 A1 discloses a fuel heater. US 5 605 133 A discloses a fuel rail pressure control. US 6 675 778 B1 discloses a fuel sender assembly. US 5 535 772 A discloses a tank venting control system.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a front view cutaway illustrates an aspect of the subject matter in accordance with one embodiment.
FIG. 2 is an isometric view illustrating an aspect of the subject matter in accordance with one embodiment.
FIG. 3 is a partial exploded view illustrating an aspect of the subject matter in accordance with one embodiment.

### DETAILED DESCRIPTION

In a multiple pump lubrication system, such as may be used in compression trains, serviceability is critical concern. For example, if one of the pumps fails, an operator may need to shut down the compression train to be able to remove the failed pumps for service. The operator may also need to shut down again to reinstall the pump after it is repaired. In both cases, special personal protection equipment, preparation work, and specific procedures are needed before removing/reinstalling the pump.

In multiple pump lubrication systems, space between a top surface of the oil that resides in the tank and the top of the reservoir, oil vapors that are released by the oil occupy this region. In some occasions, an active oil mist eliminator may be used to extract this oil vapor which may create a slight sub-atmospheric pressure inside the tank.

The top surface area of the oil contained in a compression trail may be relatively large, such as several square meters, since the length and width of the tank are usually larger than 4 and 2 m respectively. Consequently, a large quantity of oil vapors are accumulated inside the tank in the space above the top surface of the oil. If the tank is opened, such as may be required for one of the pumps sitting on top of the tank to be removed for maintenance, the accumulated oil vapors would be released to the ambient air. Without proper PPE and special preparations (for example, an N2 purge of the volume at the top of the tank), this could cause a safety and health hazard, such as a potential for fire and for oil mist being inhaled by the maintenance workers. Furthermore, if an active oil mist eliminator is used, the oil tank would lose the vacuum and this would make the system ineffective.

In view of these concerns, the inventors have innovatively created a system that provides the client with the capability of safely removing a pump with the spare pump system in operation, with some relatively small, low cost, changes to the lube oil reservoir. Advantageously, this system allows an operator to keep a lubrication system running while removing and repairing a pump in the lubrication system.

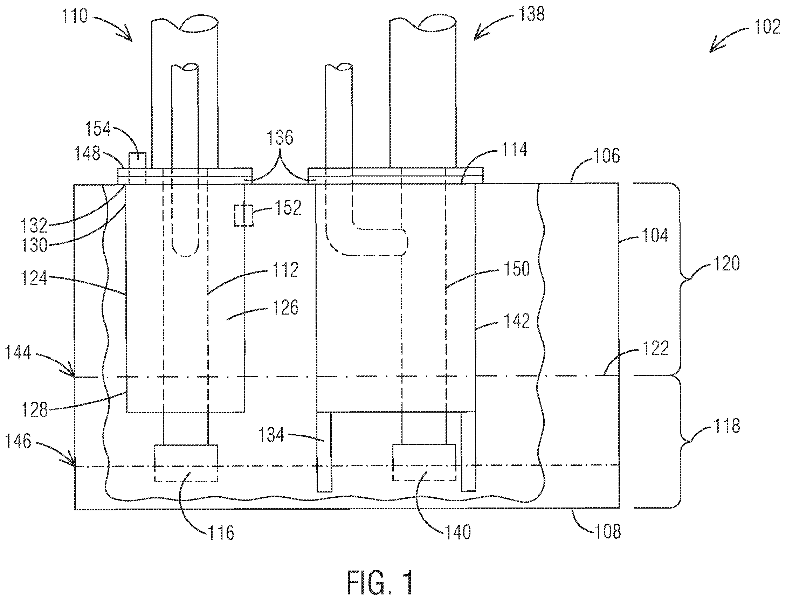

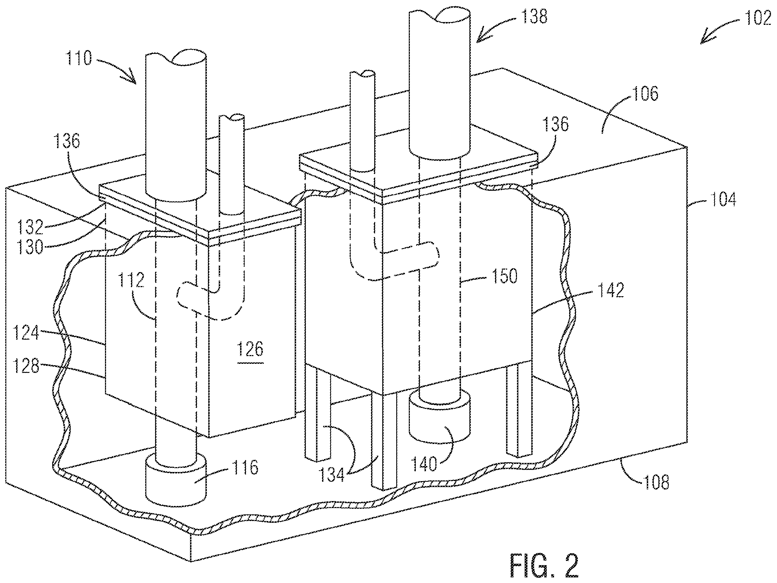

In one aspect of the invention depicted in FIGs. 1 and 2, a system 102 includes a reservoir 104 having a top 106 and a bottom 108. The system 102 includes a first pump assembly 110, including a first sump portion 112 extending, for example, downwardly along a gravity vector, through a top opening 114 at least partially into the reservoir 104. In first pump assembly 110 includes a first sump end 116 for submerging below a surface 122 of a first fluid 118 in the reservoir 104. According to the invention, a first skirt 124 extends around the first sump portion 112 downwardly from the top 106 to define a skirt volume 126 within the reservoir 104. The first skirt 124 includes a skirt lower portion 128 for submerging below the surface 122 of the first fluid 118 in the reservoir 104. The skirt lower portion 128 is spaced away from the bottom 108 of the reservoir 104 to permit a flow of the first fluid 118 to the first sump end 116. The first skirt 124 includes a skirt upper portion 130 forming a seal 132 with the top 106 to limit a flow of a second fluid 120, such as a gas, disposed above the first fluid 118 from entering the skirt volume 126. The system 102 further comprises a second pump assembly 138 comprising a second sump portion 150 extending downwardly through the top 106 at least partially into the reservoir 104 away from the first skirt 124, the second sump portion 150 having a second sump end 140 for submerging below the surface 122 of the first fluid 118 in the reservoir 104. The skirt upper portion 130 may include a lip 136 sized larger than the top opening 114. In an aspect, the skirt lower portion 128 may be spaced away from the bottom 108 of the reservoir 104 so that it is disposed above a suction loss level 146 of the system 102. The surface 122 of the first fluid 118 may include a minimum operating first fluid level 144 of the system 102. With the first skirt 124 installed in the reservoir 104, when the end-user removes the first pump assembly 110, only a small area of the first fluid 118 is exposed, and any negative pressure that is maintained in the reservoir 104, such as by an active oil mist eliminator, is maintained because the first skirt 124 penetrates into the first fluid 118. Advantageously, the first skirt 124 can be offered as a removable component which may facilitate any potential cleaning of the reservoir 104 during major maintenance operations, and also allows the solution to be easily retrofitted into existing systems 102. Alternatively, the first skirt 124 can be welded into the top 106 of the reservoir 104, for a more permanent solution.

In other aspects, the first skirt 124 may include an extension 134 extending away from, for example, downwardly along a gravity vector, from the skirt lower portion 128 towards the bottom 108. In an embodiment, the extension 134 is spaced away from the bottom 108. For example, the extensions 134 would serve as feet to hold the first skirt 124 away from the bottom 108 to prevent blocking the flow of the first fluid 118 should the first skirt 124 shift downwardly in the reservoir 104 to avoid starving the first pump assembly 110. In one aspect, the extensions 134 would not rest on the bottom 108, for example, to avoid challenges related to height tolerancing and the need to be able to seal 132 the pump top cover 148 at the top of the reservoir 104.

In other aspects of the invention, valves or vents may be provided, for example, to provide pressure equalization and/or venting of fluids, such as oil vapors. The system 102 may include a pressure equalizing vent 152 disposed in the first skirt 124 above the surface 122 of the first fluid 118 to allow fluidic communication between the second fluid 120 and skirt volume 126. The vent 152 may be configured to equalize pressure of the second fluid 120, such as air, inside the first skirt 124 to the pressure of the second fluid 120 residing in the rest of the reservoir 104, so that a fluid level in the first skirt 124 is the same as the fluid level in the rest of the reservoir 104.

In another aspect, if the system 102 uses an active oil mist eliminator, the system 102 may comprise a valve 154 disposed in the pump top cover 148 to provide selective fluidic communication between the skirt volume 126 and an external atmosphere for selectively controlling a first fluid 118 pressure in the skirt volume 126. For example, in a system 102 equipped with an active oil mist eliminator, a pressure balance between the skirt volume 126 and an external atmosphere may be accomplished by a stub out pipe and valve 154 on the pump top cover 148, thereby ensuring that a sub-atmospheric pressure is not lost through the vent 152 in the first skirt 124 when the first pump assembly 110 is removed.

Since the invention drastically reduces the area of the first fluid 118 which would be exposed to the ambient when the first pump assembly 110 is removed, the invention would also provide HSE related benefits in addition to allowing the first pump assembly 110 to be removed without affecting any potential negative pressure and without causing the exposure of the maintenance team to hazardous vapors.

According to the invention, the system 102 also includes a second pump assembly 138 having a second sump portion 150 extending downwardly, for example, along a gravity vector, through the top 106 at least partially into the reservoir 104 away from the first skirt 124. The second sump portion 150 has a second sump end 140 for submerging below the surface 122 of the first fluid 118 in the reservoir 104. The system 102 may also include a second skirt 142 extending around the second sump portion downwardly from the top 106.

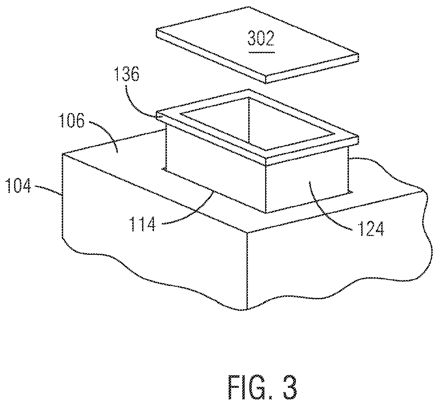

In an aspect of the invention shown in FIG. 3, the system 102 may also include a skirt top cover 302 disposable over the top opening 114 when the first pump assembly 110 is removed. Upon first pump assembly 110 removal, the skirt top cover 302 can affixed in place over the top opening 114 opening to protect the first fluid 118 from potential contamination until the first pump assembly 110 has been repaired.

Other technical features may be readily apparent to one skilled in the art from the figures, descriptions, and claims.
112 first sump portion
114 top opening
116 first sump end
118 first fluid
120 second fluid
122 surface
124 first skirt
126 skirt volume
128 skirt lower portion
130 skirt upper portion
132 seal
134 extension
136 lip
138 second pump assembly
140 second sump end
142 second skirt
144 minimum operating first fluid level
146 suction loss level
148 pump top cover
150 second sump portion
152 vent
154 valve
302 skirt top cover

## Claims

1. A system (102) comprising;
a reservoir (104) comprising a top (106) and a bottom (108),
a first pump assembly (110) comprising a first sump portion (112) extending downwardly through a top opening (114) at least partially into the reservoir (104) and having a first sump end (116) for submerging below a surface (122) of a first fluid (118) in the reservoir; and
a first skirt (124) extending around the first sump portion (112) downwardly from the top to define a skirt volume (126) within the reservoir (104), the first skirt (124) having a skirt lower portion (128) for submerging below the surface (122) of the first fluid (118) in the reservoir (104), the skirt lower portion (128) spaced away from the bottom (108) of the reservoir (104) to permit a flow of the first fluid (118) to the first sump end (116) and having a skirt upper portion (130) forming a seal (132) with the top (106) to limit a flow of a second fluid (120) disposed above the first fluid (118) from entering the skirt volume (126)
**characterized in that**
the system (102) further comprises a second pump assembly (138) comprising a second sump portion (150) extending downwardly through the top (106) at least partially into the reservoir (104) away from the first skirt (124), the second sump portion (150) having a second sump end (140) for submerging below the surface (122) of the first fluid (118) in the reservoir (104).

2. The system (102) of claim 1, wherein the skirt comprises an extension (134) extending away from the skirt lower portion (128) towards the bottom (108).

3. The system (102) of claim 2, wherein the extension (134) is spaced away from the bottom (108).

4. The system (102) of claim 1, wherein the skirt upper portion (130) comprises a lip (136) sized larger than the top opening (114).

5. The system (102) of claim 1, further comprising a second skirt (142) extending around the second sump portion (150) downwardly from the top (106).

6. The system (102) of claim 1, wherein the surface (122) of the first fluid (118) comprises a minimum operating first fluid level (144) of the system (102).

7. The system (102) of claim 1, wherein the skirt lower portion (128) is spaced away from the bottom (108) of the reservoir (104) so that it is disposed above a suction loss level (146) of the system (102).

8. The system (102) of claim 1, further comprising a skirt top cover (302) disposable over the top opening (114) when the first pump assembly (110) is removed.

9. The system (102) of claim 1, further comprising a pressure equalizing vent (152) disposed in the first skirt (124) above the surface (122) of the first fluid to allow fluidic communication between the second fluid and skirt volume (126).

10. The system (102) of claim 1, further comprising a valve (154) disposed in the pump top cover (148) to provide selective fluidic communication between the skirt volume (126) and an external atmosphere.

## Patentansprüche

1. System (102), umfassend
ein Reservoir (104), das eine Oberseite (106) und eine Unterseite (108) umfasst,
eine erste Pumpenanordnung (110), die einen ersten Sumpfabschnitt (112) umfasst, der sich nach unten durch eine obere Öffnung (114) zumindest teilweise in das Reservoir (104) erstreckt und ein erstes Sumpfende (116) zum Eintauchen unter eine Oberfläche (122) eines ersten Fluids (118) in dem Reservoir aufweist; und
eine erste Schürze (124), die sich um den ersten Sumpfabschnitt (112) von der Oberseite nach unten erstreckt, um ein Schürzenvolumen (126) innerhalb des Reservoirs (104) zu definieren, wobei die erste Schürze (124) einen unteren Schürzenabschnitt (128) zum Eintauchen unter die Oberfläche (122) des ersten Fluids (118) in dem Reservoir (104) aufweist, wobei der untere Schürzenabschnitt (128) von der Unterseite (108) des Reservoirs (104) beabstandet ist, um einen Strom des ersten Fluids (118) zu dem ersten Sumpfende (116) zu ermöglichen, und einen oberen Schürzenabschnitt (130) aufweist, der eine Dichtung (132) mit der Oberseite (106) bildet, um einen Strom eines zweiten Fluids (120), das über dem ersten Fluid (118) angeordnet ist, am Eintreten in das Schürzenvolumen (126) zu beschränken,
**dadurch gekennzeichnet, dass**
das System (102) ferner eine zweite Pumpenanordnung (138) umfasst, die einen zweiten Sumpfabschnitt (150) umfasst, der sich nach unten durch die Oberseite (106) zumindest teilweise in das Reservoir (104) von der ersten Schürze (124) weg erstreckt, wobei der zweite Sumpfabschnitt (150) ein zweites Sumpfende (140) zum Eintauchen unter die Oberfläche (122) des ersten Fluids (118) in dem Reservoir (104) aufweist.

2. System (102) nach Anspruch 1, wobei die Schürze eine Verlängerung (134) umfasst, die sich von dem unteren Schürzenabschnitt (128) zu der Unterseite (108) hin erstreckt.

3. System (102) nach Anspruch 2, wobei die Verlängerung (134) von der Unterseite (108) beabstandet ist.

4. System (102) nach Anspruch 1, wobei der obere Schürzenabschnitt (130) eine Lippe (136) umfasst, die größer als die obere Öffnung (114) bemessen ist.

5. System (102) nach Anspruch 1, ferner umfassend eine zweite Schürze (142), die sich um den zweiten Sumpfabschnitt (150) von der Oberseite (106) nach unten erstreckt.

6. System (102) nach Anspruch 1, wobei die Oberfläche (122) des ersten Fluids (118) einen minimalen ersten Betriebsfluidpegel (144) des Systems (102) aufweist.

7. System (102) nach Anspruch 1, wobei der untere Schürzenabschnitt (128) von der Unterseite (108) des Reservoirs (104) beabstandet ist, so dass er über einem Saugverlustpegel (146) des Systems (102) angeordnet ist.

8. System (102) nach Anspruch 1, ferner umfassend eine obere Schürzenabdeckung (302), die über der oberen Öffnung (114) anbringbar ist, wenn die erste Pumpenanordnung (110) entfernt wird.

9. System (102) nach Anspruch 1, ferner umfassend eine Druckausgleichsentlüftung (152), die in der ersten Schürze (124) über der Oberfläche (122) des ersten Fluids angeordnet ist, um eine fluidische Verbindung zwischen dem zweiten Fluid und dem Schürzenvolumen (126) zu ermöglichen.

10. System (102) nach Anspruch 1, ferner umfassend ein Ventil (154), das in der oberen Pumpenabdeckung (148) angeordnet ist, um eine selektive fluidische Verbindung zwischen dem Schürzenvolumen (126) und einer Außenatmosphäre bereitzustellen.

## Revendications

1. Système (102) comprenant
un réservoir (104) comprenant une partie supérieure (106) et une partie inférieure (108),
un premier ensemble de pompe (110) comprenant une première partie de puisard (112) s'étendant vers le bas à travers une ouverture supérieure (114) au moins partiellement dans le réservoir (104) et ayant une première extrémité de puisard (116) pour être immergée sous une surface (122) d'un premier fluide (118) dans le réservoir ; et
une première jupe (124) s'étendant autour de la première partie de puisard (112) vers le bas à partir de la partie supérieure pour définir un volume de jupe (126) à l'intérieur du réservoir (104), la première jupe (124) ayant une partie inférieure de jupe (128) pour être immergée sous la surface (122) du premier fluide (118) dans le réservoir (104), la partie inférieure de jupe (128) étant espacée de la partie inférieure (108) du réservoir (104) pour permettre un écoulement du premier fluide (118) vers la première extrémité de puisard (116) et ayant une partie supérieure de jupe (130) formant un joint (132) avec la partie supérieure (106) afin de limiter l'entrée d'un second fluide (120), disposé au-dessus du premier fluide (118), dans le volume de jupe (126),
**caractérisé en ce que**
le système (102) comprend en outre un second ensemble de pompe (138) comprenant une seconde partie de puisard (150) s'étendant vers le bas à travers la partie supérieure (106) au moins partiellement dans le réservoir (104) à l'écart de la première jupe (124), la seconde partie de puisard (150) ayant une seconde extrémité de puisard (140) pour être immergée sous la surface (122) du premier fluide (118) dans le réservoir (104).

2. Système (102) selon la revendication 1, dans lequel la jupe comprend une extension (134) s'étendant à l'écart de la partie inférieure de jupe (128) vers la partie inférieure (108).

3. Système (102) selon la revendication 2, dans lequel l'extension (134) est espacée de la partie inférieure (108).

4. Système (102) selon la revendication 1, dans lequel la partie supérieure de jupe (130) comprend une lèvre (136) dimensionnée plus grande que l'ouverture supérieure (114).

5. Système (102) selon la revendication 1, comprenant en outre une seconde jupe (142) s'étendant autour de la seconde partie de puisard (150) vers le bas à partir de la partie supérieure (106).

6. Système (102) selon la revendication 1, dans lequel la surface (122) du premier fluide (118) comprend un premier niveau de fluide de fonctionnement minimal (144) du système (102).

7. Système (102) selon la revendication 1, dans lequel la partie inférieure de jupe (128) est espacée de la partie inférieure (108) du réservoir (104) de sorte qu'elle est disposée au-dessus d'un niveau de perte d'aspiration (146) du système (102).

8. Système (102) selon la revendication 1, comprenant en outre un couvercle supérieur de jupe (302) pouvant être disposé sur l'ouverture supérieure (114) lorsque le premier ensemble de pompe (110) est retiré.

9. Système (102) selon la revendication 1, comprenant en outre un évent d'égalisation de pression (152) disposé dans la première jupe (124) au-dessus de la surface (122) du premier fluide pour permettre une communication fluidique entre le second fluide et le volume de jupe (126).

10. Système (102) selon la revendication 1, comprenant en outre une soupape (154) disposée dans le couvercle supérieur de pompe (148) pour fournir une communication fluidique sélective entre le volume de jupe (126) et une atmosphère externe.
